(19) Europäisches Patentamt
European Patent Office
Office européen des brevets

(11)    **EP 2 537 037 B1**

(12)    **FASCICULE DE BREVET EUROPEEN**

(45) Date de publication et mention
de la délivrance du brevet:
**20.01.2021   Bulletin 2021/03**

(21) Numéro de dépôt: **11708542.3**

(22) Date de dépôt: **09.02.2011**

(51) Int Cl.:
**G01Q 60/30** $^{(2010.01)}$      **G01Q 60/40** $^{(2010.01)}$

(86) Numéro de dépôt international:
**PCT/FR2011/050267**

(87) Numéro de publication internationale:
**WO 2011/098720 (18.08.2011 Gazette 2011/33)**

(54)    **MESURE DU POTENTIEL DE SURFACE D'UN MATERIAU**

MESSUNG DER OBERFLÄCHENSPANNUNG EINES MATERIALS

MEASUREMENT OF THE SURFACE POTENTIAL OF A MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.02.2010   FR 1000624**

(43) Date de publication de la demande:
**26.12.2012   Bulletin 2012/52**

(73) Titulaires:
• **Centre National de la Recherche Scientifique
(C.N.R.S.)
75016 Paris (FR)**
• **Universite Des Sciences Et Technologies De Lille
59655 Villeneuve D'Ascq (FR)**

(72) Inventeurs:
• **MELIN, Thierry
F-59500 DOUAI (FR)**
• **THERON, Didier
F-59100 Roubaix (FR)**
• **BARBET, Sophie
F-91310 LINAS (FR)**
• **DERESMES, Dominique
F-59830 Louvil (FR)**
• **DIESINGER, Heinrich
F-59810 Lesquin (FR)**

(74) Mandataire: **Marks & Clerk France
Immeuble "Visium"
22, avenue Aristide Briand
94117 Arcueil Cedex (FR)**

(56) Documents cités:
**JP-A- 6 308 180**

• **DIESINGER H ET AL: "Kelvin force microscopy
at the second cantilever resonance: An
out-of-vacuum crosstalk compensation setup",
ULTRAMICROSCOPY, ELSEVIER, AMSTERDAM,
NL LNKD-
DOI:10.1016/J.ULTRAMIC.2008.01.003, vol. 108,
no. 8, 1 juillet 2008 (2008-07-01), pages 773-781,
XP022763252, ISSN: 0304-3991 [extrait le
2008-01-31]**

**EP 2 537 037 B1**

**Description**

La présente invention concerne un procédé de mesure du potentiel de surface d'un matériau. Elle concerne aussi un appareil qui est adapté pour mettre en œuvre un tel procédé.

De nombreuses méthodes sont utilisées pour caractériser une surface d'un matériau, notamment d'un matériau semiconducteur.

Parmi ces méthodes, la microscopie à force atomique, ou AFM pour «Atomic Force Microscopy» en anglais, produit une caractérisation de la topographie de la surface du matériau. Autrement dit, elle fournit une cartographie de hauteur des motifs en relief et en creux qui sont présents à la surface du matériau. Pour cela, un microscope à force atomique comporte une pointe de détection qui est amenée au contact de la surface du matériau à étudier. On entend par contact une distance entre la pointe de détection et la surface à étudier qui est inférieure à 10 nm (nanomètre), typiquement. Un premier actionneur piézoélectrique permet d'ajuster la hauteur moyenne de la pointe de détection au dessus de la surface du matériau. Par ailleurs, la pointe de détection est montée sur une extrémité d'un levier élastique, dont l'autre extrémité est fixée sur un second actionneur piézoélectrique, aussi appelé actionneur bimorphe. Un mode de saisie de la topographie de la surface du matériau consiste à appliquer une tension électrique alternative entre deux électrodes de commande du second actionneur piézoélectrique, et à enregistrer des variations de flexion du levier au contact de la surface, pendant que la pointe de détection est déplacée sur cette surface. Pendant la mesure, la pointe de détection est donc agitée par le second actionneur piézoélectrique, par l'intermédiaire du levier, selon un mouvement d'oscillation qui possède une composante perpendiculaire à la surface du matériau à étudier.

Une autre caractérisation connue de la surface d'un matériau consiste à mesurer la valeur du potentiel de cette surface en des points variables, et à construire ensuite une cartographie du potentiel de surface. Le potentiel de surface est noté $V_S$ dans toute la suite. Cette autre caractérisation est couramment désignée par KFM, pour «Kelvin Force Microscopy». Elle peut aussi être réalisée en utilisant un microscope à force atomique, mais en maintenant la pointe de détection à distance de la surface du matériau, par exemple à plusieurs dizaines de nanomètres de cette surface. L'information qui est ainsi saisie lors d'une caractérisation KFM concerne uniquement le potentiel de surface du matériau, et non la topographie de sa surface. En toute généralité, la valeur du potentiel de surface qui est mesurée peut varier en fonction de la hauteur de la pointe au dessus de la surface du matériau. Lors de la caractérisation KFM, une tension électrique $V_M$ est appliquée entre la pointe de détection et le matériau étudié, qui possède une composante de tension continue $V_M(0)$ et une composante de tension alternative $V_M(\omega_E)$. Une force d'interaction électrique à distance est ainsi produite entre la pointe de détection et le matériau étudié. Cette force électrique possède une composante $F(\omega_E, t)$ à la fréquence angulaire $\omega_E$ de la composante alternative de tension électrique, dite fréquence angulaire d'excitation. Selon la théorie, la composante de force $F(\omega_E, t)$ est donnée par la formule suivante :

$$F(\omega_E, t) = (dC/dh) \times (V_M(0) - V_S) \times V_M(\omega_E) \cos(\omega_E \cdot t)$$

où C désigne la capacité du condensateur qui est formé par la pointe de détection et la surface du matériau, h est la hauteur de séparation entre la pointe de détection et la surface du matériau, cos désigne la fonction trigonométrique du cosinus et t la variable du temps. Ainsi, la valeur de la composante continue $V_M(0)$ pour laquelle la déformation du levier possède une composante spectrale nulle à la fréquence angulaire d'excitation $\omega_E$, constitue une mesure du potentiel de surface $V_S$.

Il existe encore un autre mode de caractérisation de la surface du matériau, dans lequel des caractérisations AFM et KFM sont réalisées simultanément. Dans cet autre mode, dit mode combiné, la pointe de détection du microscope à force atomique est disposée au contact de la surface à étudier, pour saisir la topographie de celle-ci comme pour le mode de caractérisation AFM. L'actionneur piézoélectrique est encore commandé pour appliquer au levier qui porte la pointe de détection, un mouvement d'oscillation mécanique qui est sensiblement perpendiculaire à la surface à étudier. Une tension alternative est appliquée en même temps entre la pointe de détection et la portion du matériau à étudier. Les fréquences respectives de l'oscillation mécanique et de la tension alternative sont différentes. Les variations de hauteur de la pointe de détection sont alors analysées simultanément aux deux fréquences, de sorte que ce mode combiné fournit en même temps une cartographie de hauteur des motifs en relief et en creux de la surface et une cartographie de son potentiel de surface $V_S$. Autrement dit, ces deux cartographies sont déduites d'un même balayage unique de la surface du matériau par la pointe de détection. Mais les valeurs du potentiel de surface du matériau qui sont obtenues de cette façon sont des valeurs moyennes par rapport aux variations de hauteur de la pointe de détection au dessus de la surface du matériau. En outre, à cause de son principe, ce mode combiné ne permet pas de mesurer facilement des variations du potentiel de surface en fonction de la distance moyenne qui sépare la pointe de détection de la surface de matériau étudiée.

Pour ces raisons, l'utilisation d'un microscope à force atomique dans le mode KFM est la plus appropriée pour caractériser le potentiel de surface d'un matériau. Dans ce mode, la pointe de détection est maintenue à une hauteur constante au dessus de la surface à étudier, puisque la composante continue de la tension électrique qui est appliquée entre la pointe de détection et le matériau est ajustée pour annuler l'amplitude des oscillations de la pointe.

Afin d'obtenir une précision supérieure pour la mesure du potentiel de surface $V_S$ en mode KFM, la fréquence angulaire d'excitation $\omega_E$ est sélectionnée usuellement à l'intérieur d'un intervalle spectral de résonance du levier, pour être proche d'une fréquence propre d'oscillation du levier en flexion. En effet, une réponse optimale du levier à l'excitation par la composante alternative de la tension électrique $V_M$ est obtenue dans ces conditions. Néanmoins, cette composante alternative de la tension électrique qui est appliquée à la pointe de détection n'est qu'une grandeur opératoire qui est utilisée pour la mesure. Par conséquent, la valeur du potentiel de surface $V_S$ du matériau étudié est, par principe, indépendante de la fréquence angulaire d'excitation $\omega_E$. Or, dans la pratique, le résultat de la mesure du potentiel de surface en mode KFM varie de plusieurs centaines de millivolts lorsque la fréquence angulaire d'excitation qui est utilisée est modifiée. Une telle variation du résultat de la mesure empêche d'obtenir expérimentalement une valeur absolue du potentiel de surface, notamment pour un matériau semiconducteur pour lequel la bande interdite («gap» en anglais) possède une largeur de l'ordre de 1 V (volt). Seules des variations du potentiel de surface peuvent alors être mesurées, pour lesquelles il est nécessaire de procéder à un étalonnage rigoureux des mesures. Or la procédure de cet étalonnage est particulièrement longue et fastidieuse.

Par ailleurs, en mode KFM, il est aussi nécessaire d'utiliser un angle de projection («drive phase» en anglais) pour asservir la valeur de la composante continue $V_M(0)$ de la tension électrique qui est appliquée entre la pointe de détection et le matériau, à une réduction des variations de hauteur de la pointe de détection pour la fréquence d'excitation. Cet angle de projection est un paramètre opératoire du système de mesure. Par conséquent, la valeur du potentiel de surface est aussi indépendante de la valeur de cet angle de projection, par principe. Or le résultat d'une mesure en mode KFM du potentiel de surface varie aussi de plusieurs centaines de millivolts dans la pratique, en fonction de la valeur qui est choisie pour cet angle de projection.

Le document JP 6 308 180 concerne la caractérisation d'une surface en mode KFM.

L'article de Diesinger H. et al. intitulé «Kelvin force microscopy at the second cantilever resonance : An out-of-vacuum crosstalk compensation setup », Ultramicroscopy, Elsevier, Amsterdam, NL LNKD-DOI: 10.1016/J. ULTRAMIC.2008.01.003, vol.108, No.8, 1 juillet 2008, pp.773-781, concerne un couplage direct qui peut exister en mode KFM entre l'excitation électrique de la pointe de détection et le système de détection des variations de hauteur instantanée de cette pointe.

Dans ces conditions, un premier but de l'invention est de fournir une mesure du potentiel de surface d'un matériau, dont le résultat est indépendant de paramètres opératoires tels que la fréquence angulaire d'excitation électrique d'une pointe de détection qui est utilisée pour la mesure, ou l'angle de projection qui est utilisé pour asservir la valeur de la composante continue d'une tension électrique de mesure.

Un deuxième but de l'invention est de fournir une mesure du potentiel de surface d'un matériau semiconducteur, avec un intervalle de précision qui est très inférieur à la largeur de la bande interdite de ce matériau.

Un troisième but de l'invention est de permettre de mesurer le potentiel de surface d'un matériau, sans qu'un étalonnage des mesures soit nécessaire, ou qu'un tel étalonnage qui serait nécessaire soit rapide et facile à mettre en œuvre.

Un quatrième but de l'invention est de permettre de mesurer le potentiel de surface d'un matériau en utilisant un appareil de mesure qui est disponible commercialement, et notamment un tel appareil qui aurait été acquis avant la présente invention.

Pour atteindre ces buts et d'autres, la revendication 1 de présente invention propose un procédé de mesure du potentiel de surface d'une portion de matériau, suivant lequel une pointe de détection qui est conductrice électriquement est disposée au dessus d'une surface de cette portion de matériau. Un premier actionneur piézoélectrique est agencé pour contrôler une distance moyenne de la pointe de détection au dessus de la surface de la portion du matériau. Par ailleurs, un second actionneur piézoélectrique est agencé en outre pour contrôler une oscillation mécanique de la pointe de détection au dessus de la surface de la portion de matériau, en fonction d'une tension électrique qui est présente entre deux électrodes de commande de ce second actionneur piézoélectrique. Le procédé comprend les étapes suivantes :

- appliquer une tension électrique de mesure entre la pointe de détection et la portion du matériau, cette tension électrique de mesure comprenant une composante continue et une composante alternative ayant une fréquence angulaire d'excitation sélectionnée ;
- détecter simultanément des variations de la hauteur instantanée de la pointe de détection ;
- mesurer une amplitude d'une composante des variations de la hauteur instantanée de la pointe de détection, pour la fréquence angulaire d'excitation ; et
- ajuster une valeur de la composante continue de la tension électrique de mesure, de façon à réduire ou annuler l'amplitude de la composante des variations de la hauteur instantanée de la pointe de détection pour la fréquence angulaire d'excitation, la valeur ajustée de la composante continue de la tension électrique de mesure formant un résultat de la mesure du potentiel de surface de la portion du matériau.

Le procédé de l'invention est caractérisé en ce que, pendant que les variations de la hauteur instantanée de la pointe de détection sont détectées :

- les deux électrodes de commande du second actionneur piézoélectrique sont connectées électriquement à deux bornes de référence, respectivement ; et

- une tension électrique de contrôle est appliquée entre ces deux électrodes de commande du second actionneur piézoélectrique, par l'intermédiaire des deux bornes de référence, cette tension électrique de contrôle possédant une amplitude nulle de composante alternative pour la fréquence angulaire d'excitation.

Ainsi, un procédé selon l'invention est conforme au mode de caractérisation KFM de la portion de matériau. Il fournit donc une mesure du potentiel de surface de cette portion. Selon l'invention, le mode de caractérisation KFM est complété pour contrôler la tension électrique qui est présente entre les électrodes de commande du second actionneur piézoélectrique, de sorte que cette tension ne possède pas de composante spectrale à la fréquence angulaire d'excitation. Un tel contrôle de la tension entre les électrodes de commande du second actionneur piézoélectrique assure que cet actionneur ne transmette pas de mouvement à la pointe de détection, qui participerait aux variations de la hauteur instantanée de cette dernière à la fréquence angulaire d'excitation. Ainsi, un couplage parasite qui existerait entre une source de la composante alternative de la tension électrique de mesure d'une part et l'actionneur piézoélectrique d'autre part, ne perturberait pas l'ajustement de la composante continue de la tension électrique de mesure. Un tel couplage parasite n'altérerait donc pas le résultat de la mesure du potentiel de surface.

Selon un perfectionnement de l'invention, une contribution à un signal électrique de détection de la composante des variations de la hauteur instantanée de la pointe de détection pour la fréquence angulaire d'excitation, peut en outre être compensée pendant que ces variations de hauteur instantanée sont détectées, cette contribution résultant d'un couplage direct entre la tension électrique de mesure qui est appliquée entre la pointe de détection et la portion du matériau d'une part, et des moyens de détection qui sont utilisés pour détecter les variations de la hauteur instantanée de la pointe de détection d'autre part.

Cet autre couplage est dit couplage direct parce qu'il intervient entre l'excitation électrique de la pointe de détection en mode KFM et le système de détection des variations de hauteur instantanée de cette pointe. Grâce à sa compensation selon le perfectionnement de l'invention, il n'intervient plus dans l'ajustement de la composante continue de la tension électrique de mesure pour réduire ou annuler l'amplitude de la composante des variations de la hauteur instantanée de la pointe de détection pour la fréquence angulaire d'excitation. Il ne perturbe donc pas le résultat de la mesure du potentiel de surface qui est ainsi obtenu.

Eventuellement, la mise en oeuvre du perfectionnement de l'invention peut comprendre en outre des mesures préalables de la contribution du couplage direct à un signal électrique de détection des variations de la hauteur instantanée de la pointe de détection, pour des fréquences angulaires qui sont différentes de la fréquence angulaire d'excitation. La contribution du couplage direct peut alors être compensée conformément à une extrapolation, à la fréquence angulaire d'excitation, de résultats de ces mesures préalables.

Lorsque ce couplage direct entre l'excitation électrique de la pointe de détection en mode KFM et les moyens de détection des variations de hauteur de cette pointe n'existe pas, ou lorsqu'il est présent mais compensé selon le perfectionnement précédent de l'invention, le résultat de la mesure du potentiel de surface est indépendant de la fréquence angulaire d'excitation qui est utilisée pour la mesure. Le résultat de la mesure est aussi indépendant de l'angle de projection qui est utilisé pour ajuster la composante continue de la tension électrique de mesure en fonction de la composante alternative, à la fréquence angulaire d'excitation, des variations de hauteur instantanée de la pointe de détection. Autrement dit, l'invention fournit une mesure absolue du potentiel de surface de la portion du matériau.

L'intervalle de précision du résultat de la mesure du potentiel de surface peut être estimé en variant la fréquence angulaire d'excitation en mode KFM, ou en variant l'angle de projection qui est utilisé pour ajuster la composante continue de la tension électrique de mesure. En mettant en oeuvre l'invention, les inventeurs ont obtenu une largeur de 10 à 30 mV (millivolt) pour cet intervalle de précision. Par exemple, lorsque le matériau de la portion étudiée est semiconducteur, une telle largeur est très inférieure à la largeur de la bande interdite («gap value») du matériau, cette dernière pouvant être de l'ordre de 1 eV (électron-volt»). Autrement dit, l'invention permet notamment de mesurer le niveau de Fermi d'un matériau semiconducteur avec précision.

En outre, l'invention supprime la ou les procédure(s) d'étalonnage réalisée(s) à partir d'échantillons de matériaux de référence, pour calibrer l'outil de mesure du potentiel de surface qui est utilisé. Seule la détermination du couplage direct, entre l'excitation électrique de la pointe de détection en mode KFM et les moyens de détection des variations de hauteur instantanée de cette pointe, est nécessaire pour le perfectionnement de l'invention. Mais cette étape préalable est courte et facile à mettre en œuvre.

Enfin, un procédé selon l'invention peut être mis en oeuvre en utilisant un microscope à force atomique. Notamment, un modèle d'un tel microscope qui était disponible avant la présente invention peut être utilisé, en connectant selon l'invention les électrodes de commande du second actionneur piézoélectrique pendant que des mesures sont réalisées en mode KFM.

Selon une mise en oeuvre particulièrement simple de l'invention, la tension électrique de contrôle peut être constamment nulle pendant que les variations de la hauteur instantanée de la pointe de détection sont détectées. Autrement dit, les deux électrodes de commande de l'actionneur piézoélectrique sont connectées électriquement l'une à l'autre pendant une mesure en mode KFM.

La revendication 8 de l'invention propose aussi un appareil de mesure du potentiel de surface, qui est adapté pour mettre en œuvre un procédé selon l'invention. Un tel appareil est adapté pour appliquer entre les électrodes de commande du second actionneur piézoélectrique, pendant une mesure en mode de caractérisation KFM, une tension électrique de contrôle qui possède une amplitude nulle de composante alternative pour la fréquence angulaire d'excitation.

Pour cela, des moyens de connexion peuvent comprendre un ensemble de commutation, qui est adapté pour connecter électriquement les électrodes de commande du second actionneur piézoélectrique à deux bornes de référence lorsqu'un générateur électrique de la tension de mesure est activé, et pour isoler électriquement ces électrodes de commande par rapport aux bornes de référence lorsqu'un mode de caractérisation topographique est sélectionné pour l'appareil. Un tel ensemble de commutation peut être interne à un microscope à force atomique qui est utilisé pour mesurer le potentiel de surface, ou bien appartenir à un module externe au microscope à force atomique. Cette dernière possibilité permet d'appliquer l'invention en utilisant un microscope à force atomique qui a été acquis antérieurement, en ajoutant le module au microscope.

D'autres particularités et avantages de la présente invention apparaîtront dans la description ci-après d'un exemple de mise en œuvre non limitatif, en référence aux dessins annexés, dans lesquels :

- la figure 1 est un schéma de principe montrant les principaux composants d'un appareil de mesure de potentiel de surface selon l'invention ;

- la figure 2 est un diagramme illustrant des paramètres d'un asservissement utilisé dans un mode de mise en œuvre de l'invention ; et

- les figures 3a et 3b sont des diagrammes comparant des résultats de mesures de potentiel de surface obtenus avant l'invention et en utilisant l'invention, respectivement.

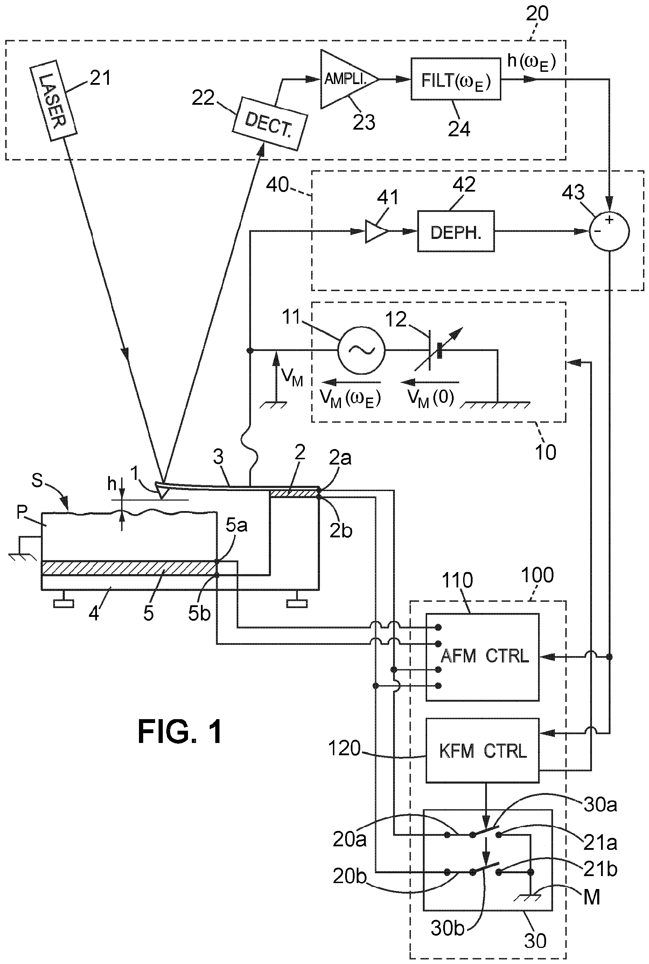

Conformément à la figure 1, un appareil de mesure du potentiel de surface d'une portion P d'un matériau comprend :

- une pointe de détection 1, qui est conductrice électriquement et destinée à être disposée au dessus d'une surface S de la portion P ;

- un premier actionneur piézoélectrique, ou actionneur bimorphe, qui est référencé 5 et agencé pour contrôler une distance moyenne entre la pointe de détection 1 et la surface S de la portion P ;

- un second actionneur piézoélectrique 2, ou bimorphe piézoélectrique, qui est pourvu de deux électrodes de commande 2a et 2b, et qui est adapté pour contrôler une oscillation mécanique de la pointe de détection 1 au dessus de la surface S, en fonction d'une tension électrique présente entre les deux électrodes de commande 2a et 2b ;

- un générateur électrique 10, qui est adapté pour appliquer une tension électrique de mesure $V_M$ entre la pointe de détection 1 et la portion du matériau P, cette tension électrique de mesure $V_M$ comprenant une composante continue $V_M(0)$ et une composante alternative $V_M(\omega_E)$ ayant une fréquence angulaire d'excitation $\omega_E$ ;

- des moyens de détection 20, qui sont adaptés pour détecter des variations d'une hauteur instantanée h de la pointe de détection 1 ;

- des moyens de mesure, qui sont adaptés pour mesurer une amplitude d'une composante $h(\omega_E)$ des variations de la hauteur instantanée h de la pointe de détection 1, pour la fréquence angulaire d'excitation $\omega_E$ ;

- des moyens de régulation, qui sont adaptés pour ajuster une valeur de la composante continue $V_M(0)$ de la tension électrique de mesure $V_M$, de façon à réduire ou annuler l'amplitude de la composante $h(\omega_E)$ des variations de la hauteur instantanée h de la pointe de détection 1 pour la fréquence angulaire d'excitation $\omega_E$, la valeur ajustée de cette composante continue $V_M(0)$ formant un résultat de la mesure du potentiel de surface $V_S$ de la portion du matériau P ; et

- une unité de contrôle de l'appareil, qui est référencée 100.

Un tel appareil de mesure peut comprendre un microscope à force atomique. Selon une configuration d'appareil qui est possible, l'actionneur piézoélectrique 5 peut être agencé entre la portion P du matériau à étudier et un support 4 de l'appareil. L'actionneur piézoélectrique 2 peut alors être agencé entre le support 4 et un levier élastique 3 qui supporte mécaniquement la pointe de détection 1. Le levier 3 porte la pointe de détection 1 à l'une de ses extrémités, et son autre extrémité est connectée rigidement à l'actionneur 2. L'actionneur 2 permet donc de déplacer la pointe de détection 1 selon une direction qui est sensiblement perpendiculaire à la surface S de la portion de matériau P, par l'intermédiaire du levier 3. Usuellement, ce déplacement de la pointe de détection 1 par l'actionneur 2 est incliné de 10-15° environ par rapport à la direction qui est perpendiculaire à la surface S de la portion P.

Le générateur électrique 10 comprend une source de tension alternative 11, qui peut être à fréquence variable, et une source de tension continue variable 12. Les sources 11 et 12 sont connectées de sorte que le générateur 10 produise en sortie une tension de mesure $V_M$ qui comprend une somme d'une composante de tension alternative $V_M(\omega_E)$ et d'une composante de tension continue $V_M(0)$.

Les moyens de détection 20 comprennent usuellement une source laser 21 et un détecteur lumineux 22 qui sont fixes. La source 21 et le détecteur 22 sont disposés pour qu'un faisceau lumineux qui est produit par la source 21 soit réfléchi par l'extrémité du levier 3 qui porte la pointe de détection 1, vers le détecteur 22, d'une façon qui varie en fonction de la hauteur instantanée h de la pointe 1. Une sortie de signal électrique du détecteur 22 est connectée à un amplificateur 23, ainsi qu'à des moyens de filtrage de signal électrique 24.

De façon connue, dans le mode de fonctionnement dit mode AFM, une caractérisation topographique de la surface S peut être obtenue avec un tel appareil, à partir des variations de la hauteur instantanée h de la pointe de détection 1 lorsque celle-ci est déplacée parallèlement à la surface S. Par principe du mode AFM, la pointe de détection 1 est amenée au contact de la surface S et reproduit les variations de hauteur de la surface S. En fait, l'actionneur piézoélectrique 2 applique une excitation mécanique à la pointe 1, par l'intermédiaire du levier 3, et les variations de la hauteur instantanée h sont détectées à la fréquence de cette excitation mécanique. L'unité de contrôle 100 comprend un module de contrôle du fonctionnement en mode AFM, qui est référencé 110 sur la figure 1 et noté AFM CTRL, pour contrôleur AFM. Ce contrôleur AFM 110 est relié aux électrodes de commande 5a et 5b de l'actionneur piézoélectrique 5, et à celles 2a et 2b de l'actionneur piézoélectrique 2. Mais ce fonctionnement en mode AFM n'étant pas l'objet de l'invention, il n'est pas illustré par la figure 1.

De façon aussi connue, le mode de fonctionnement dit mode KFM permet d'utiliser le même microscope à force atomique pour mesurer le potentiel de surface $V_S$ de la portion de matériau P. Ce mode KFM est distinct du mode AFM précédent, et est illustré par la figure 1. En particulier, la pointe de détection 1 est positionnée à une distance moyenne de la surface S, qui est sélectionnée par l'opérateur pour obtenir une mesure du potentiel de surface pour cette distance moyenne, et le générateur électrique 10 est utilisé pour appliquer une excitation électrique à la pointe de détection 1. En mode KFM, l'actionneur piézoélectrique 2 n'est pas utilisé. Par conséquent, le mode KFM qui est considéré dans la présente demande de brevet n'est pas non plus un mode combiné pour caractériser simultanément la topographie et le potentiel de surface de la portion P.

Comme il a été rappelé dans la première partie de cette description, en mode KFM, le générateur électrique 10 applique la tension électrique de mesure $V_M$ entre la pointe de détection 1 et la portion P du matériau à étudier. La tension $V_M$ provoque une oscillation de la pointe de détection 1, qui est détectée par les moyens de détection 20. Le signal électrique qui est produit par le détecteur lumineux 22 puis amplifié par l'amplificateur 23, est ensuite transmis au filtre 24. Le filtre 24 sélectionne la composante du signal électrique de détection, qui possède une fréquence angulaire identique à la fréquence angulaire d'excitation $\omega_E$. Pour cette raison, le filtre 24 est noté $FILT(\omega_E)$ sur la figure 1. Le filtre 24 transmet ensuite un signal filtré de détection à un module de contrôle du fonctionnement en mode KFM, qui est référencé 120 et noté KFM CTRL, pour contrôleur KFM. Ce signal filtré de détection est représentatif de la composante des variations de la hauteur instantanée h de la pointe de détection 1 à la fréquence angulaire d'excitation $\omega_E$. Par raccourci, le signal filtré de détection est noté $h(\omega_E)$ sur la figure 1. Les modules de contrôle 110 et 120 sont représentés fonctionnellement de façon séparée, mais il est entendu qu'ils peuvent être réalisés pratiquement en un module unique qui possède alternativement les deux modes de fonctionnement AFM et KFM.

Le module 120 incorpore les moyens de mesure qui déterminent la composante $h(\omega_E)$, à la fréquence angulaire $\omega_E$, des variations de la hauteur instantanée h de la pointe de détection 1, à partir du signal filtré de détection qui est transmis par le filtre 24. Il incorpore aussi les moyens de régulation qui ajustent la valeur de la composante continue $V_M(0)$ de la tension électrique de mesure $V_M$, pour réduire ou annuler la composante $h(\omega_E)$. Un asservissement est ainsi constitué, qui ajuste la valeur de $V_M(0)$. Lorsque la composante $h(\omega_E)$ est nulle, ou au moins minimale, la valeur de $V_M(0)$ constitue une mesure du potentiel de surface $V_S$ de la portion de matériau P.

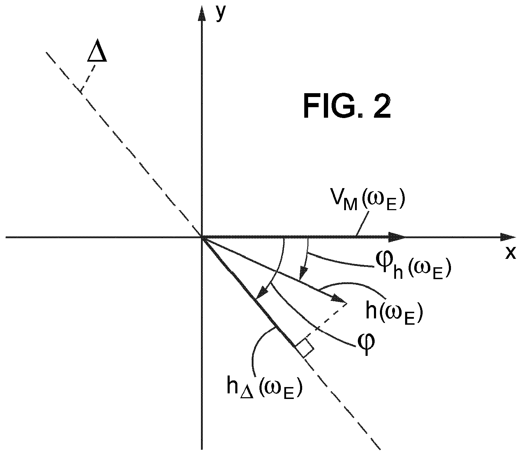

De façon connue, cet asservissement utilise un paramètre opératoire intermédiaire, qui est appelé angle de projection et noté $\varphi$. La figure 2 est une représentation à l'intérieur du plan complexe, des composantes alternatives à la fréquence angulaire d'excitation $\omega_E$ qui interviennent dans le mode KFM. La composante $V_M(\omega_E)$ de la tension de mesure $V_M$ définit une origine des phases correspondant à l'axe x. L'axe y, perpendiculaire à l'axe x, correspond à un déphasage en quadrature. En régime stationnaire, la composante $h(\omega_E)$ des variations de la hauteur instantanée h présente un déphasage angulaire $\varphi_h(\omega_E)$ par rapport à $V_M(\omega_E)$, qui est constant. L'angle de projection $\varphi$ est un angle qui est aussi constant, entre la composante $V_M(\omega_E)$ et un axe de projection $\Delta$ qui passe par l'origine du plan complexe. De plus, la composante $h(\omega_E)$ forme aussi un angle constant avec l'axe de projection $\Delta$, et la projection de $h(\omega_E)$ sur l'axe $\Delta$, perpendiculairement à cet axe, constitue un paramètre d'asservissement algébrique. Cette projection est notée $h_\Delta(\omega_E)$. On entend par paramètre algébrique une grandeur dont le signe peut varier, par opposition à l'amplitude d'une composante spectrale de signal, qui est positive ou nulle. D'après la théorie connue du mode KFM, la projection $h_\Delta(\omega_E)$ est proportionnelle à la différence algébrique entre la composante continue $V_M(0)$ et le potentiel de surface $V_S$ de la portion P. L'asservissement de la composante continue $V_M(0)$ pour annuler la projection $h_\Delta(\omega_E)$ est plus facile à réaliser. Toutefois, l'angle de projection $\varphi$ n'est qu'un paramètre intermédiaire de l'asservissement, dont la valeur peut être fixée arbitrairement par l'opérateur. La valeur du potentiel de surface $V_S$ est donc, par principe, indépendante que la valeur qui est adoptée pour l'angle de projection $\varphi$.

De même, en mode KFM, la valeur du potentiel de surface $V_S$ est, par nature, aussi indépendante de la valeur de la fréquence d'excitation $\omega_E$. Dans la pratique, la fréquence angulaire d'excitation $\omega_E$ est sélectionnée proche de la fréquence de résonance du levier 3, pour augmenter l'amplitude de $h(\omega_E)$. La précision de l'asservissement est ainsi meilleure. Le plus souvent, la fréquence d'excitation $\omega_E$ est sélectionnée dans l'intervalle 10 kHz (kilohertz) - 500 kHz.

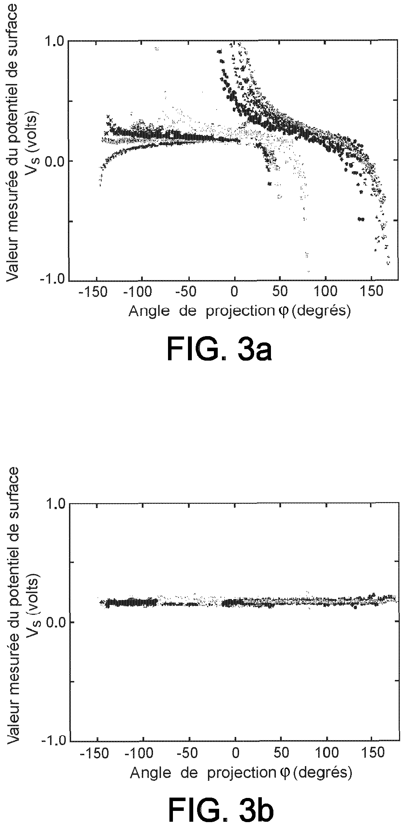

Or, les inventeurs ont observé que les résultats des mesures du potentiel de surface $V_S$ qui sont réalisées avec les microscopes à force atomique existants dépendaient des valeurs sélectionnées pour l'angle de projection $\varphi$ et pour la fréquence angulaire d'excitation $\omega_E$. La figure 3a est un diagramme qui indique les résultats de telles mesures, pour une portion P d'alliage métallique platine-iridium, lorsque des valeurs différentes sont choisies pour l'angle de projection $\varphi$ (axe d'abscisse du diagramme), et pour des valeurs différentes de la fréquence angulaire d'excitation $\omega_E$ (symboles de points différents dans le diagramme correspondant à des valeurs différentes de $\omega_E$). Les variations des résultats des mesures qui sont rapportés dans ce diagramme ne permettent pas de déterminer le potentiel de surface $V_S$ avec une précision qui serait inférieure à 0,3 V. Il n'est donc pas possible d'en déduire la valeur réelle du potentiel de surface de l'alliage platine-iridium.

La présente invention apporte un remède à cette situation et permet de d'obtenir, en mode KFM, un résultat précis pour la mesure du potentiel de surface $V_S$.

Pour cela, l'unité de contrôle 100 est adaptée pour commander des moyens de connexion pendant que les moyens de détection 20 sont eux-mêmes activés, de façon à connecter électriquement les électrodes de commande 2a et 2b de l'actionneur piézoélectrique 2 à deux bornes de référence, respectivement, et pour commander simultanément qu'une tension électrique de contrôle soit produite entre ces bornes de référence. En outre, la tension électrique de contrôle possède une amplitude de composante alternative qui est nulle pour la fréquence angulaire d'excitation. Ainsi, en mode KFM, l'actionneur piézoélectrique 2 ne produit aucune contribution au mouvement de la pointe de détection 1, qui possèderait une composante non nulle pour la fréquence angulaire d'excitation $\omega_E$. Par exemple, la tension électrique de contrôle peut être constamment nulle pendant que les moyens de détection sont activés.

Dans le mode particulier de mise en œuvre de l'invention qui est illustré par la figure 1, un module de commutation 30 est ajouté au microscope à force atomique, qui comprend deux commutateurs 30a et 30b. Une première connexion 20a relie l'électrode de commande 2a de l'actionneur piézoélectrique 2 à une borne d'entrée du commutateur 30a. Une borne de sortie 21a du commutateur 30a est connectée à la masse M de l'appareil, de sorte que le commutateur 30a relie électriquement l'électrode de commande 2a à la masse M lorsqu'il est activé. De même, une seconde connexion 20b relie l'électrode de commande 2b de l'actionneur piézoélectrique 2 à une borne d'entrée du commutateur 30b. Une borne de sortie 21b du commutateur 30b est aussi connectée à la masse M. Ainsi, le commutateur 30b peut relier électriquement l'électrode 20b à la masse M. Les deux commutateurs 30a et 30b sont commandés simultanément par le module de contrôle 120. Ainsi, en mode KFM, les deux électrodes 2a et 2b de l'actionneur 2 sont au même potentiel électrique, à savoir le potentiel nul. En mode AFM, les deux commutateurs 30a et 30b sont ouverts, de sorte que le module 110 peut contrôler le fonctionnement de l'appareil de façon usuelle.

Toutefois, une telle connexion des deux électrodes de commande 2a et 2b à la masse M en mode KFM assure une neutralisation de l'actionneur piézoélectrique 2 qui est d'autant plus efficace que les liaisons électriques sont courtes entre les électrodes de commande 2a et 2b d'une part et la masse M d'autre part. Autrement dit, une borne de la masse M est avantageusement disposée au plus près des électrodes de commande 2a et 2b, de façon à minimiser l'effet d'antenne ou de boucle d'induction que pourrait produire les liaisons électriques entre les électrodes de commande 2a, 2b et la masse M. De façon générale, l'Homme du métier comprendra que le but de l'invention consiste à ce que la tension électrique de contrôle soit réellement présente entre les deux électrodes de commande 2a et 2b, sans que soit cumulée avec cette tension de contrôle une tension électrique parasite qui serait captée par les connexions d'application de la tension de contrôle. Dans le mode de mise en œuvre de la figure 1, le module de connexion 30 est donc avantageusement le plus petit possible et disposé au plus proche de l'actionneur 2, avec des liaisons électriques intermédiaires qui sont courtes et peuvent être superposées ou torsadées entre elles.

Selon les inventeurs, connecter les électrodes de commande 2a et 2b à deux bornes de référence ayant entre elles une tension électrique contrôlée, cette tension pouvant être nulle comme dans le mode particulier de mise en œuvre qui est illustré par la figure 1, supprime un couplage parasite qui serait présent entre le générateur électrique 10 qui est utilisé en mode KFM et l'actionneur piézoélectrique 2. En effet, à cause d'un tel couplage, dit couplage indirect, l'actionneur piézoélectrique 2 produit une composante de mouvement de la pointe de détection 1 à la fréquence angulaire d'excitation $\omega_E$, qui se combine avec la composante $h(\omega_E)$ qui résulte de la tension de mesure $V_M$. Or ce couplage indirect dépend de la fréquence angulaire d'excitation $\omega_E$. En outre, il est aussi la cause, au moins en partie, de la dépendance des résultats des mesures du potentiel de surface $V_S$ par rapport à l'angle de projection $\varphi$. De plus, ce même couplage indirect est encore responsable d'une contribution parasite à des variations des résultats de la mesure du potentiel de surface $V_S$ en fonction de la hauteur $h$ de la pointe de détection 1. L'invention permet donc aussi de supprimer une telle contribution parasite. Par suite, elle permet de réaliser une vraie étude de la variation du potentiel de surface $V_S$ en fonction de la distance d'éloignement par rapport à la surface S de la portion P du matériau à étudier. Autrement dit, des valeurs du potentiel de surface peuvent être mesurées à des instants successifs d'un déplacement relatif de la pointe de détection 1 par rapport à la surface S de la portion du matériau, perpendiculairement à cette surface, de façon à mesurer des variations du potentiel de surface de la portion P en fonction de la distance moyenne entre la pointe de détection 1 et la surface S.

Un autre couplage peut intervenir par ailleurs, qui contribue aussi à modifier les résultats des mesures du potentiel de surface $V_S$ d'une façon variable en fonction de l'angle de projection $\varphi$ et de la fréquence d'excitation $\omega_E$, et à modifier la dépendance de ces résultats de mesure en fonction de la distance d'éloignement de la pointe de détection 1 par rapport à la surface S. Cet autre couplage intervient directement entre le générateur électrique 10 qui est utilisé en mode KFM et les moyens de détection 20. Plus précisément, il intervient entre la source de tension alternative 11 et le détecteur 22. Pour cette raison, cet autre couplage est dit direct.

Ce couplage direct peut être compensé dans le signal filtré de détection qui est produit par les moyens de détection 20, afin qu'il ne perturbe pas l'ajustement de la composante continue $V_M(0)$ de la tension de mesure pour annuler la composante alternative $h(\omega_E)$ des variations de hauteur instantanée de la pointe de détection 1. Pour cela, l'appareil peut comprendre en outre des moyens de compensation, qui sont adaptés pour compenser une contribution au signal électrique de détection de la composante $h(\omega_E)$ des variations de la hauteur instantanée $h$ de la pointe de détection 1, pour la fréquence angulaire d'excitation $\omega_E$. L'unité de contrôle 100 est adaptée en outre pour activer ces moyens de compensation pendant que les moyens de détection 20 sont eux-mêmes activés. Par exemple, de tels moyens de compensation peuvent être agencés sous la forme d'un module 40 qui est connecté en entrée à la sortie du générateur électrique 10. Ce module 40 peut comprendre un atténuateur ou amplificateur 41, un déphaseur 42 et un soustracteur 43 qui sont assemblés en série. Le soustracteur 43 est interposé entre la sortie des moyens de détection 20 et le module 120 de contrôle du fonctionnement en mode KFM, de sorte qu'une reproduction de la composante $V_M(\omega_E)$, atténuée ou amplifiée et déphasée, est soustraite du signal filtré de détection de la composante $h(\omega_E)$.

Dans ce cas, la contribution du couplage direct au signal électrique de détection de la composante $h(\omega_E)$ est déterminée préalablement à une mesure du potentiel de surface $V_S$. Cette contribution est mesurée pour des fréquences qui sont différentes de la valeur de la fréquence angulaire d'excitation $\omega_E$ qui est sélectionnée pour réaliser les mesures KFM. Puis elle est extrapolée à cette valeur $\omega_E$ sélectionnée pour les mesures. L'amplitude et la phase de la contribution du couplage direct sont ainsi déterminées pour la fréquence angulaire d'excitation $\omega_E$ de mesure. Une telle extrapolation évite la perturbation que pourrait provoquer la résonance du levier 3 pour la fréquence angulaire d'excitation $\omega_E$, sur la mesure de la contribution du couplage direct. Par exemple, la fréquence angulaire d'excitation $\omega_E$ peut être environ 76 kHz (kilohertz), et l'extrapolation peut être obtenue à partir d'un intervalle compris entre 50 kHz et 100 kHz. L'atténuateur 41 et le déphaseur 42 sont ensuite ajustés pour reproduire ce signal de couplage direct. Le soustracteur 43 compense alors la contribution du couplage direct dans le signal filtré de détection qui est reçu par le module 120. Une mesure exacte du potentiel de surface $V_S$ à l'aide du microscope à force atomique est ainsi possible en mode de fonctionnement KFM.

Le diagramme de la figure 3b correspond à celui de la figure 3a lorsque le module de commutation 30 et le module de compensation 40 sont utilisés en mode KFM de la façon qui vient d'être décrite. La valeur de la composante continue $V_M(0)$ qui annule la composante alternative $h(\omega_E)$ est alors indépendante de l'angle de projection $\varphi$ et de la fréquence angulaire d'excitation $\omega_E$. Elle constitue réellement une mesure absolue du potentiel de surface $V_S$ de la portion de matériau P. Pratiquement, les variations des résultats des mesures du potentiel de surface $V_S$, lorsque l'angle de projection $\varphi$ et la fréquence angulaire d'excitation $\omega_E$ sont variés comme indiqué dans les diagrammes des figures 3a et 3b, sont de l'ordre de ou inférieures à quelques dizaines de millivolts. Une précision des mesures qui est de l'ordre du microvolt peut aussi être obtenue lorsque des durées d'intégration suffisamment longues sont utilisées.

Enfin, dans un procédé de mesure du potentiel de surface selon l'invention, des valeurs du potentiel de surface $V_S$ peuvent être mesurées à des instants successifs d'un déplacement relatif de la pointe de détection 1 parallèlement à la surface S du matériau. Une cartographie du potentiel de surface $V_S$ de la portion de matériau P peut ainsi être obtenue, qui indique les valeurs mesurées de $V_S$ en fonction de coordonnées du déplacement de la pointe sur la surface S.

Il est entendu que la présente invention peut être mise en œuvre en introduisant de nombreuses modifications par rapport à la description détaillée qui a été fournie ci-dessus. Parmi ces modifications, on peut citer de façon non exhaustive :

- les moyens de détection 20, pour détecter les variations de la hauteur instantanée h de la pointe de détection 1, qui peuvent être d'une technologie différente connue de l'Homme du métier, en particulier de nature non-optique. Par exemple, le levier 3 peut être remplacé par une branche d'un diapason qui est excité par un actionneur piézoélectrique, et dont la déformation instantanée est détectée par des électrodes aussi en matériau piézoélectrique ; et

- au lieu de compenser le couplage direct en ajoutant un signal de compensation en temps réel à la composante $h(\omega_E)$ du signal électrique de détection filtré, il est possible de déterminer l'amplitude et le déphasage de la contribution du couplage direct, et de les combiner de façon logicielle avec l'amplitude et la phase de la composante $h(\omega_E)$ pour obtenir une compensation analogue en régime stationnaire.

**Revendications**

1. Procédé de mesure d'un potentiel de surface d'une portion de matériau (P), suivant lequel une pointe de détection (1) conductrice électriquement est disposée au dessus d'une surface (S) de ladite portion de matériau, avec un premier actionneur piézoélectrique (5) agencé pour contrôler une distance moyenne de la pointe de détection au dessus de ladite surface de la portion du matériau, et un second actionneur piézoélectrique (2) agencé pour contrôler une oscillation mécanique de ladite pointe de détection au dessus de ladite surface de la portion du matériau en fonction d'une tension électrique présente entre deux électrodes de commande (2a, 2b) dudit second actionneur piézoélectrique, le procédé comprenant les étapes suivantes :

   - appliquer une tension électrique de mesure ($V_M$) entre la pointe de détection et la portion du matériau, ladite tension électrique de mesure comprenant une composante continue ($V_M(0)$) et une composante alternative ($V_M(\omega_E)$) ayant une fréquence angulaire d'excitation ($\omega_E$) sélectionnée ;
   - détecter simultanément des variations de la hauteur instantanée (h) de la pointe de détection (1) ;
   - mesurer une amplitude d'une composante ($h(\omega_E)$) des dites variations de la hauteur instantanée de la pointe de détection, pour ladite fréquence angulaire d'excitation ; et
   - ajuster une valeur de la composante continue ($V_M(0)$) de la tension électrique de mesure, de façon à réduire ou annuler l'amplitude de la composante ($h(\omega_E)$) des variations de la hauteur instantanée de la pointe de détection pour la fréquence angulaire d'excitation, la valeur ajustée de ladite composante continue de la tension électrique de mesure formant un résultat de la mesure du potentiel de surface de la portion du matériau (P) ;

   le procédé étant **caractérisé en ce que**, pendant que les variations de la hauteur instantanée (h) de la pointe de détection (1) sont détectées :

   - les deux électrodes de commande (2a, 2b) du second actionneur piézoélectrique (2) sont connectées électriquement à deux bornes de référence (21a, 21b), respectivement ; et
   - une tension électrique de contrôle est appliquée entre les deux électrodes de commande (2a, 2b) du second actionneur piézoélectrique (2), par l'intermédiaire des deux bornes de référence (21a, 21b), ladite tension électrique de contrôle possédant une amplitude nulle de composante alternative pour la fréquence angulaire d'excitation ($\omega_E$).

2. Procédé selon la revendication 1, suivant lequel une contribution à un signal électrique de détection de la composante ($h(\omega_E)$) des variations de la hauteur instantanée (h) de la pointe de détection (1) pour la fréquence angulaire d'excitation, est en outre compensée pendant que les dites variations de la hauteur instantanée de la pointe de détection sont détectées, ladite contribution résultant d'un couplage direct entre la tension électrique de mesure ($V_M$) appliquée entre la pointe de détection (1) et la portion du matériau (P) d'une part, et des moyens de détection (20) utilisés pour détecter les variations de la hauteur instantanée de la pointe de détection d'autre part.

3. Procédé selon la revendication 2, comprenant en outre des mesures préalables de la contribution du couplage direct à un signal électrique de détection des variations de la hauteur instantanée (h) de la pointe de détection (1) pour des fréquences angulaires différentes de la fréquence angulaire d'excitation, et suivant lequel ladite contribution du couplage direct à la composante des variations de la hauteur instantanée de la pointe de détection pour la fréquence angulaire d'excitation ($\omega_E$) est compensée conformément à une extrapolation, à ladite fréquence angulaire d'excitation, de résultats des mesures préalables pour les fréquences angulaires différentes de la fréquence angulaire d'excitation.

4. Procédé selon l'une quelconque des revendications précédentes, suivant lequel la tension électrique de contrôle est constamment nulle pendant que les variations de la hauteur instantanée (h) de la pointe de détection (1) sont détectées.

5. Procédé selon l'une quelconque des revendications précédentes, mis en œuvre en utilisant un microscope à force atomique.

6. Procédé selon l'une quelconque des revendications 1 à 5, suivant lequel des valeurs du potentiel de surface sont mesurées à des instants successifs d'un déplacement relatif de la pointe de détection (1) par rapport à la surface (S) de la portion du matériau (P), parallèlement à ladite surface de la portion du matériau, de façon à obtenir une cartographie du potentiel de surface de ladite portion de matériau.

7. Procédé selon l'une quelconque des revendications 1 à 5, suivant lequel des valeurs du potentiel de surface sont mesurées à des instants successifs d'un déplacement relatif de la pointe de détection (1) par rapport à la surface (S) de la portion du matériau (P), perpendiculairement à ladite surface de la portion du matériau, de façon à mesurer des variations du potentiel de surface de ladite portion de matériau en fonction de la distance moyenne entre ladite pointe de détection et ladite surface de la portion de matériau.

8. Appareil de mesure d'un potentiel de surface d'une portion de matériau (P), comprenant :

   - une pointe de détection (1) conductrice électriquement destinée à être disposée au dessus d'une surface (S) de la portion de matériau ;
   - un premier actionneur piézoélectrique (5) agencé pour contrôler une distance moyenne entre la pointe de détection (1) et la surface (S) de la portion de matériau ;
   - un second actionneur piézoélectrique (2) pourvu de deux électrodes de commande (2a, 2b), et agencé pour contrôler une oscillation mécanique de la pointe de détection (1) au dessus de la surface (S) de la portion de matériau en fonction d'une tension électrique présente entre deux électrodes de commande (2a, 2b) dudit second actionneur piézoélectrique ;
   - un générateur électrique (10), adapté pour appliquer une tension électrique de mesure ($V_M$) entre la pointe de détection (1) et la portion du matériau (P), ladite tension électrique de mesure comprenant une composante continue ($V_M(0)$) et une composante alternative ($V_M(\omega_E)$) ayant une fréquence angulaire d'excitation ($\omega_E$) ;
   - des moyens de détection (20), adaptés pour détecter des variations d'une hauteur instantanée (h) de la pointe de détection (1) ;
   - des moyens de mesure, adaptés pour mesurer une amplitude d'une composante ($h(\omega_E)$) des dites variations de la hauteur instantanée (h) de la pointe de détection (1), à ladite fréquence angulaire d'excitation ;
   - des moyens de régulation, adaptés pour ajuster une valeur de la composante continue ($V_M(0)$) de la tension électrique de mesure, de façon à réduire ou annuler l'amplitude de la composante ($h(\omega_E)$) des variations de la hauteur instantanée de la pointe de détection pour la fréquence angulaire d'excitation, la valeur ajustée de ladite composante continue de la tension électrique de mesure formant un résultat de la mesure du potentiel de surface de la portion du matériau (P) ; et
   - une unité (100) de contrôle de l'appareil ;

   l'appareil étant **caractérisé en ce que** l'unité de contrôle (100) est adaptée pour commander des moyens de connexion pendant que les moyens de détection (20) sont activés, de façon à connecter électriquement les électrodes de commande (2a, 2b) du second actionneur piézoélectrique (2) à deux bornes de référence (21a, 21b), respectivement, et pour commander simultanément qu'une tension électrique de contrôle soit produite entre lesdites bornes de référence, ladite tension électrique de contrôle possédant une amplitude nulle de composante alternative pour la fréquence angulaire d'excitation ($\omega_E$).

9. Appareil selon la revendication 8, comprenant en outre des moyens de compensation (40), adaptés pour compenser une contribution à un signal électrique de détection de la composante (h($\omega_E$)) des variations de la hauteur instantanée (h) de la pointe de détection (1) pour la fréquence angulaire d'excitation, l'unité de contrôle (100) étant adaptée en outre pour activer lesdits moyens de compensation pendant que les moyens de détection (20) sont eux-mêmes activés.

10. Appareil selon la revendication 8 ou 9, dans lequel que l'unité de contrôle (100) est adaptée pour que la tension électrique de contrôle soit constamment nulle pendant que les moyens de détection (20) sont activés.

11. Appareil selon l'une quelconque des revendications 8 à 10, comprenant un microscope à force atomique.

12. Appareil selon la revendication 11, dans lequel les moyens de connexion comprennent un ensemble de commutation (30a, 30b), adapté pour connecter électriquement les électrodes de commande (2a, 2b) du second actionneur piézoélectrique (2) aux deux bornes de référence (21a, 21b) lorsque le générateur électrique (10) est activé, et pour isoler électriquement lesdites électrodes de commande du second actionneur piézoélectrique par rapport aux dites bornes de référence lorsqu'un mode de caractérisation topographique est sélectionné pour l'appareil.

13. Appareil selon les revendications 11 et 12, dans lequel l'ensemble de commutation (30a, 30b) appartient à un module (30) externe au microscope à force atomique.

**Patentansprüche**

1. Verfahren zur Messung einer Oberflächenspannung eines Materialabschnitts (P), welchem zufolge eine elektrisch leitfähige Detektionsspitze (1) oberhalb einer Oberfläche (S) des Materialabschnitts angeordnet ist, mit einem ersten piezoelektrischen Betätigungselement (5), welches angeordnet ist, um einen mittleren Abstand der Detektionsspitze oberhalb der Oberfläche des Materialabschnitts zu kontrollieren, und einem zweiten piezoelektrischen Betätigungselement (2), welches angeordnet ist, um eine mechanische Schwingung der Detektionsspitze oberhalb der Oberfläche des Materialabschnitts entsprechend einer elektrischen Spannung zu kontrollieren, welche zwischen zwei Steuerelektroden (2a, 2b) des zweiten piezoelektrischen Betätigungselements anliegt, wobei das Verfahren folgende Schritte umfasst:

- Anlegen einer elektrischen Messspannung ($V_M$) zwischen der Detektionsspitze und dem Materialabschnitt, wobei die elektrische Messspannung eine Gleichspannungskomponente ($V_M(0)$) und eine Wechselspannungskomponente ($V_M(\omega_E)$) umfasst mit einer ausgewählten Winkelerregungsfrequenz ($\omega_E$) aufweist;
- gleichzeitiges Erfassen der Variationen der augenblicklichen Höhe (h) der Detektionsspitze (1);
- Messen der Amplitude einer Komponente (h($\omega_E$)) der Variationen der augenblicklichen Höhe der Detektionsspitze, für die Winkelerregungsfrequenz; und
- Anpassen eines Wertes der Gleichspannungskomponente ($V_M(0)$) der elektrischen Messspannung, um die Amplitude der Komponente (h($\omega_E$)) der Variationen der augenblicklichen Höhe der Detektionsspitze für die Winkelerregungsfrequenz zu reduzieren oder zu neutralisieren, wobei der angepasste Wert der Gleichspannungskomponente der elektrischen Messspannung ein Resultat der Oberflächenspannungsmessung des Materialabschnitts (P) bildet;

wobei das Verfahren **dadurch gekennzeichnet ist, dass**, während die Variationen der augenblicklichen Höhe (h) der Detektionsspitze (1) erfasst werden:

- die beiden Steuerelektroden (2a, 2b) des zweiten piezoelektrischen Betätigungselements (2) elektrisch jeweils mit zwei Referenzklemmen (21a, 21b) verbunden sind; und
- eine elektrische Kontrollspannung zwischen den beiden Steuerelektroden (2a, 2b) des zweiten piezoelektrischen Betätigungselements (2) über die beiden Referenzklemmen (21a, 21b) angelegt wird, wobei die elektrische Kontrollspannung eine Wechselspannungskomponenten-Amplitude gleich null für die Winkelerregungsfrequenz ($\omega_E$) aufweist.

2. Verfahren nach Anspruch 1, demzufolge ein Beitrag zu einem elektrischen Erfassungssignal der Komponente (h($\omega_E$)) der Variationen der augenblicklichen Höhe (h) der Detektionsspitze (1) für die Winkelerregungsfrequenz ferner kompensiert wird, während die Schwankungen der augenblicklichen Höhe der Detektionsspitze erfasst werden, wobei der Beitrag aus einer direkten Kopplung zwischen der elektrischen Messspannung ($V_M$), welche zwischen der Detektionsspitze (1) und dem Materialabschnitt (P) einerseits angelegt wird, und den Erfassungsmitteln (20) resultiert, welche zum Erfassen der Schwankungen der augenblicklichen Höhe der Messspitze andererseits eingesetzt werden.

3. Verfahren nach Anspruch 2, ferner umfassend vorherige Messungen des Beitrags der direkten Kopplung zu einem elektrischen Erfassungssignal der Variationen der augenblicklichen Höhe (h) der Detektionsspitze (1) für Winkelfrequenzen, welche sich von der Erregungswinkelfrequenz unterscheiden, und welchem zufolge der Beitrag der direkten Kopplung zu der Komponente der Variationen der augenblicklichen Höhe der Detektionsspitze für die Erregungswinkelfrequenz ($\omega_E$) gemäß einer Extrapolation bei der Erregungswinkelfrequenz um Ergebnisse der vorherigen Messungen für Winkelfrequenzen kompensiert wird, welche sich von der Erregungswinkelfrequenz unterscheiden.

4. Verfahren nach einem der vorhergehenden Ansprüche, gemäß welchem die elektrische Kontrollspannung konstant gleich null ist, während die Variationen der augenblicklichen Höhe (h) der Detektionsspitze (1) erfasst werden.

5. Verfahren nach einem der vorhergehenden Ansprüche, welches unter Verwendung eines Atomkraftmikroskops umgesetzt wird.

6. Verfahren nach einem der Ansprüche 1 bis 5, gemäß welchem die Werte der Oberflächenspannung zu aufeinanderfolgenden Zeitpunkten einer relativen Verschiebung der Detektionsspitze (1) in Bezug auf die Oberfläche (S) des Materialabschnitts (P) parallel zu der Oberfläche des Materialabschnitts gemessen werden, um eine Kartierung der Oberflächenspannung des Materialabschnitts zu erhalten.

7. Verfahren nach einem der Ansprüche 1 bis 5, gemäß welchem die Werte der Oberflächenspannung zu aufeinanderfolgenden Zeitpunkten einer relativen Verschiebung der Detektionsspitzel (1) in Bezug auf die Oberfläche (S) des Materialabschnitts (P) rechtwinklig zu der Oberfläche des Materialabschnitts gemessen werden, um Schwankungen der Oberflächenspannung des Materialabschnitts entsprechend dem mittleren Abstand zwischen der Detektionsspitze und der Oberfläche des Materialabschnitts zu messen.

8. Gerät zum Messen einer Oberflächenspannung eines Materialabschnitts (P), Folgendes umfassend:

    - eine elektrisch leitfähige Detektionsspitze (1), welche dazu bestimmt ist, oberhalb einer Oberfläche (S) des Materialabschnitts angeordnet zu sein;
    - ein erstes piezoelektrisches Betätigungselement (5), welches angeordnet ist, um einen mittleren Abschnitt zwischen der Detektionsspitze (1) und der Oberfläche (S) des Materialabschnitts zu kontrollieren;
    - ein zweites piezoelektrisches Betätigungselement (2), welches mit zwei Steuerelektroden (2a, 2b) versehen und angeordnet ist, um eine mechanische Oszillation der Detektionsspitze (1) oberhalb der Oberfläche (S) des Materialabschnitts entsprechend einer elektrischen Spannung zu kontrollieren, welche zwischen zwei Steuerelektroden (2a, 2b) des piezoelektrischen Betätigungselements anliegt;
    - einen elektrischen Generator (10), welcher geeignet ist zum Anlegen einer elektrischen Messspannung ($V_M$) zwischen der Detektionsspitze (1) und dem Materialabschnitt (P), wobei die elektrische Messspannung eine Gleichspannungskomponente ($V_M(0)$) und eine Wechselspannungskomponente ($V_M(\omega_E)$) mit einer ausgewählten Winkelerregungsfrequenz ($\omega_E$) umfasst;
    - Erfassungsmittel (20), welche geeignet sind, um Schwankungen einer augenblicklichen Höhe (h) der Detektionsspitze (1) zu erfassen;
    - Messmittel, welche geeignet sind zum Messen der Amplitude einer Komponente ($h(\omega_E)$) der Variationen der augenblicklichen Höhe (h) der Detektionsspitze (1) bei der Winkelerregungsfrequenz;
    - Regelungsmittel, welche geeignet sind zum Anpassen eines Wertes der Gleichspannungskomponente ($V_M(0)$) der elektrischen Messspannung, um die Amplitude der Komponente ($h(\omega_E)$) der Variationen der augenblicklichen Höhe der Detektionsspitze für die Winkelerregungsfrequenz zu reduzieren oder zu neutralisieren, wobei der angepasste Wert der Gleichspannungskomponente der elektrischen Messspannung ein Resultat der Oberflächenspannungsmessung des Materialabschnitts (P) bildet; und
    - eine Kontrolleinheit (100) des Gerätes;

wobei das Gerät **dadurch gekennzeichnet ist, dass** die Kontrolleinheit (100) geeignet ist, um Verbindungsmittel zu steuern, während Erfassungsmittel (20) aktiviert sind, um die Steuerelektroden (2a, 2b) des zweiten piezoelektrischen Betätigungselements (2) jeweils elektrisch mit zwei Referenzklemmen (21a, 21b) zu verbinden und um gleichzeitig zu befehlen, dass eine elektrische Kontrollspannung zwischen den Referenzklemmen erzeugt wird, wobei die elektrische Kontrollspannung eine Amplitude der Wechselspannungskomponente gleich null für die Er-

regungswinkelfrequenz ($\omega_E$) aufweist.

9. Gerät nach Anspruch 8, ferner umfassend Kompensierungsmittel (40), welche geeignet sind, um einen Beitrag zu einem elektrischen Detektionssignal der Komponente ($h(\omega_E)$) der Schwankungen der augenblicklichen Höhe (h) der Detektionsspitze (1) für die Winkelerregungsfrequenz zu kompensieren, wobei die Kontrolleinheit (100) ferner geeignet ist, um die Kompensierungsmittel zu aktivieren, während die Erfassungsmittel (20) ihrerseits aktiviert sind.

10. Gerät nach Anspruch 8 oder 9, wobei die Kontrolleinheit (100) dazu geeignet ist, dass die elektrische Kontrollspannung konstant null beträgt, während die Erfassungsmittel (20) aktiviert sind.

11. Gerät nach einem der Ansprüche 8 bis 10, welches ein Atomkraftmikroskop umfasst.

12. Gerät nach Anspruch 11, wobei die Verbindungsmittel eine Umschaltanordnung (30a, 30b) umfassen, welche geeignet ist, um elektrisch die Steuerelektroden (2a, 2b) des zweiten piezoelektrischen Betätigungselements (2) mit den zwei Referenzklemmen (21a, 21b) zu verbinden, wenn der elektrische Generator (10) aktiviert ist, und um die Steuerelektroden des zweiten piezoelektrischen Betätigungselements elektrisch gegenüber den Referenzklemmen zu isolieren, wenn ein Modus der topographischen Charakterisierung für das Gerät gewählt ist.

13. Gerät nach den Ansprüchen 11 und 12, wobei die Umschaltanordnung (30a, 30b) zu einem Modul (30) außerhalb des Atomkraftmikroskops gehört.

**Claims**

1. A method for measuring a surface potential of a portion of material (P), wherein an electrically conductive detection tip (1) is placed above a surface (S) of said portion of material, with a first piezoelectric actuator (5) arranged to control a mean distance of the detection tip above said surface of the portion of material, and a second piezoelectric actuator (2) arranged to control a mechanical oscillation of said detection tip above said surface of the portion of material as a function of a voltage existing between two control electrodes (2a, 2b) of said second piezoelectric actuator, said method comprising the following steps:

    - applying a measurement voltage ($V_M$) between the detection tip and the portion of material, said measurement voltage comprising a DC component ($V_M(0)$) and an AC component ($V_M(\omega_E)$) having a selected angular frequency of excitation ($\omega_E$);
    - simultaneously detecting variations in the instant height (h) of the detection tip (1);
    - measuring an amplitude of a component ($h(\omega_E)$) of said variations in the instant height of the detection tip, for said angular frequency of excitation; and
    - adjusting a value of the DC component ($V_M(0)$) of the measurement voltage so as to reduce or cancel the amplitude of the component ($h(\omega_E)$) of the variations in the instant height of the detection tip for the angular frequency of excitation, the adjusted value of said DC component of the measurement voltage constituting a result of the measurement of the surface potential of the portion of material (P);

    the method being **characterized in that**, while the variations in the instant height (h) of the detection tip (1) are being detected:

    - the two driving electrodes (2a, 2b) of the second piezoelectric actuator (2) are electrically connected to two respective reference terminals (21a, 21b); and
    - a control voltage is applied between the two driving electrodes (2a, 2b) of the second piezoelectric actuator (2) through the two reference terminals (21a, 21b), said control voltage having a zero AC component amplitude for the angular frequency of excitation ($\omega_E$).

2. The method according to claim 1, wherein a contribution to an electrical detection signal for the component ($h(\omega_E)$) of the variations in the instant height (h) of the detection tip (1) for the angular frequency of excitation is further compensated while said variations in the instant height of the detection tip are being detected, said contribution resulting from a direct coupling between the measurement voltage ($V_M$) applied on the one hand between the detection tip (1) and the portion of material (P), and on the other hand between detection means (20) used to detect the variations in the instant height of the detection tip.

3. The method according to claim 2, further comprising prior measurements of the contribution of the direct coupling to an electrical signal for detecting the variations in the instant height (h) of the detection tip (1), for angular frequencies different from the angular frequency of excitation, and wherein said contribution of the direct coupling to the component of the variations in the instant height of the detection tip for the angular frequency of excitation ($\omega_E$) is compensated for results from the prior measurements for angular frequencies different from the angular frequency of excitation in accordance with an extrapolation, at said angular frequency of excitation, .

4. The method according to any one of the preceding claims, wherein the control voltage is constantly zero while the variations in the instant height (h) of the detection tip (1) are being detected.

5. The method according to any one of the preceding claims, implemented using an atomic force microscope.

6. The method according to any one of claims 1 to 5, wherein values of the surface potential are measured at successive times of a relative displacement of the detection tip (1) with respect to the surface (S) of the portion of material (P), parallel to said surface of the portion of material, so as to obtain a map of the surface potential of said portion of material.

7. The method according to any one of claims 1 to 5, wherein values of the surface potential are measured at successive times of a relative displacement of the detection tip (1) with respect to the surface (S) of the portion of material (P), perpendicularly to said surface of the portion of material, so as to measure variations in the surface potential of said portion of material as a function of the mean distance between said detection tip and said surface of the portion of material.

8. A device for measuring a surface potential of a material (P), comprising:

   - an electrically conductive detection tip (1) to be placed above a surface (S) of the portion of material;
   - a first piezoelectric actuator (5) arranged to control a mean distance between the detection tip (1) and the surface (S) of the portion of material;
   - a second piezoelectric actuator (2) provided with two control electrodes (2a, 2b) and arranged to control a mechanical oscillation of the detection tip (1) above the surface (S) of the portion of material as a function of a voltage between two control electrodes (2a, 2b) of said second piezoelectric actuator;
   - an electrical generator (10) adapted to apply a measurement voltage ($V_M$) between the detection tip (1) and the portion of material (P), said measurement voltage comprising a DC component ($V_M(0)$) and an AC component ($V_M(\omega_E)$) having an angular frequency of excitation ($\omega_E$);
   - detection means (20) adapted to detect variations in an instant height (h) of the detection tip (1);
   - measuring means adapted to measure an amplitude of a component ($h(\omega_E)$) of said variations in the instant height (h) of the detection tip (1) at said angular frequency of excitation;
   - regulation means adapted to adjust a value of the DC component ($V_M(0)$) of the measurement voltage so as to reduce or cancel the amplitude of the component ($h(\omega_E)$) of the variations in the instant height of the detection tip for the angular frequency of excitation, the adjusted value of said DC component of the measurement voltage constituting a result of the measurement of the surface potential of the portion of material (P); and
   - a control unit (100) of the device

   the device being **characterized in that** the control unit (100) is adapted to drive connection means while the detection means (20) are activated, so as to electrically connect the driving electrodes (2a, 2b) of the second piezoelectric actuator (2) to two reference terminals (21a, 21b), respectively, and to simultaneously drive the production of a control voltage between said reference terminals, said control voltage having a zero AC component amplitude for the angular frequency of excitation ($\omega_E$).

9. The device according to claim 8, further comprising compensation means (40) adapted to compensate for a contribution to an electrical detection signal for the component ($h(\omega_E)$) of the variations in the instant height (h) of the detection tip (1) for the angular frequency of excitation, the control unit (100) being further adapted to activate said compensation means while the detection means (20) are activated.

10. The device according to claim 8 or 9, wherein the control unit (100) is adapted to cause the control voltage to be constantly zero while the detection means (20) are activated.

11. The device according to any one of claim 8 to 10, comprising an atomic force microscope.

**12.** The device according to claim 11, wherein the connection means comprise a switch assembly (30a, 30b), adapted to electrically connect the driving electrodes (2a, 2b) of the second piezoelectric actuator (2) to the two reference terminals (21a, 21b) when the generator (10) is activated, and to electrically isolate said driving electrodes of the second piezoelectric actuator from said reference terminals when a topographic characterization mode is selected for the device.

**13.** The device according to claims 11 and 12, wherein the switch assembly (30a, 30b) belongs to a module (30) that is external to the atomic force microscope.

**FIG. 1**

FIG. 2

FIG. 3a

FIG. 3b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 6308180 B

**Littérature non-brevet citée dans la description**

- Kelvin force microscopy at the second cantilever resonance : An out-of-vacuum crosstalk compensation setup. **DIESINGER H. et al.** Ultramicroscopy. Elsevier, 01 Juillet 2008, vol. 108, 773-781